# EUROPEAN PATENT APPLICATION

(11) **EP 3 945 131 A1**
(43) Date of publication of application: **02.02.2022**
(21) Application number: 20187904.6
(22) Date of filing: 27.07.2020
(51) Int. Cl.: C12H 6/02, F04D 29/12, F04D 15/02

(54) **METHOD FOR MONITORING A PUMP IN A PLANT FOR REDUCING THE ALCOHOLIC CONTENT IN A BEVERAGE AND SUCH A PLANT**

(71) Applicant: Api Schmidt-Bretten Gmbh&co. Kg, 75015 Bretten (DE)
(72) Inventor: TEUBER, Wilfried, 75033 Gondelsheim (DE)
(74) Representative: Mammel und Maser

(57) **Abstract**

The invention relates to a method for monitoring an plant (10) for reducing an alcohol content in a beverage and such an plant (10) in which a medium is sucked in by a pump (45, 46, 48) via a suction line (26, 44, 47, 42) and is supplied under pressure to a downstream component of the plant (10) via a pressure line, in which the pump (45, 46, 48) is arranged between a drive shaft (76) of a motor (77) and a housing (71), 72) has a sealing cartridge (63) which comprises a sealing chamber (79) which is supplied with a sealing medium via an inlet line (62) and the sealing medium is discharged from the sealing chamber (79) via an outlet line (64), in which the volume flow of the sealing medium discharged from the sealing chamber (79) into the outlet line (64) is monitored in the outlet line (64) with a flow monitor (66).

## Description

The invention relates to a method for monitoring a pump in a plant for reducing the alcohol content in a beverage and a plant for reducing an alcohol content in a beverage.

From DE 38 43 516 A1 such a plant for reducing the alcohol content of a beverage is known. This plant comprises a degasser to which the alcoholic beverage is fed from a storage container. Furthermore, a rectifying device with a first and a second column is provided. A line branching off from the second column leads reduced-alcohol beverage to a separator, from which this reduced-alcohol beverage is discharged from the plant via an outlet line or fed to a collecting vessel. A condenser and a cooler are provided downstream of the rectifier. An alcohol concentrate can be discharged from the cooler.

Vapours are separated by the rectifying device. These vapours may include alcohol, perfumes and/or aromatic substances. The alcohol is separated from the vapours. The rectifier is integrated in a closed circuit so that the vapours discharged in the rectifier are condensed and the condensate will be returned to the rectifier.

The demands on the reliability of such plants are increasing.

The invention is based on the task of proposing a method for monitoring a plant for reducing the alcohol content in a beverage as well as such a plant, thus enabling increased process safety.

This task is solved by a method for monitoring a plant for reducing the alcohol content in a beverage, in which a pump is used, which sucks in a medium via a suction line and feeds it under pressure to a downstream component via a pressure line, the pump having a sealing cartridge between a drive shaft and a housing, which comprises a sealing chamber which is supplied with a sealing medium via a feed line and from which the sealing medium is discharged via a discharge line, and in which the volume flow of the sealing medium discharged from the sealing chamber into the discharge line is monitored in the discharge line by means of a flow monitor. In this way, the functional efficiency of the pump can be monitored. If a leak occurs in the seal between the housing of the pump and the drive shaft, a reduced or a missing volume flow in the discharge line is detected by the flow monitor and an error message is issued. In addition, it can also be detected whether a sealing medium is being carried in the discharge line at all. If this is not the case, an error message can also be output, as the sealing medium is required to lubricate the seals in the sealing cartridge.

It is preferable that the sealing medium is supplied to the sealing chamber at a constant volume flow and preferably the volume flow is adjusted with a manually controlled or an electrically controlled valve. This enables a control device to have a concrete input signal in order to monitor the pump.

Advantageously, in the control device of the plant for reducing the alcohol content in a beverage, the volume flow of the sealing medium, set or activated on the input side and fed to the sealing chamber, is compared with a volume flow detected on the output side by the flow monitor arranged in the discharge line and an error message is output in the event of a deviation within a preferably adjustable tolerance range. In this way, immediately upon the occurrence of a possible fault, a measure for rectifying the fault can be initiated in order either to stop the process for reducing the alcohol content in a beverage or to trigger a discharge for the beverage reduced in alcohol accordingly, so that after the error message the impaired beverage is not discharged into a collecting tank.

A centrifugal pump with a sealing cartridge is preferably used in the plant to reduce the alcohol content in a beverage. The cartridge is sealed between a housing of the sealing cartridge and the drive shaft with a double mechanical seal. This allows the use of a sealing medium to monitor the tightness of this centrifugal pump. Alternatively, it may also be provided that vacuum pumps are monitored by analogy in this way.

The task underlying the invention is further solved by a plant for reducing an alcohol content in a beverage, which comprises pumps through which liquid media are conveyed in the plant, wherein the pump has a sealing cartridge with a sealing chamber between the housing and the drive shaft, to which a sealing medium is supplied via a supply line leading to the sealing chamber and can be discharged via a discharge line, and has a flow monitor for detecting the volume flow of the barrier liquid in the discharge line. This arrangement of the flow monitor downstream of the pump in the discharge line has the advantage that both a reduced and a missing volume flow of the sealing medium downstream of the pump can be detected and thus any faults that occur can be detected. If the sealing rings of the sealing cartridge between the housing of the pump and the drive shaft are damaged, the flow volume in the discharge line will increase. If a fault should occur in the supply of the sealing medium to the sealing cartridge, a drop in the volume flow would be detected by the flow monitor. Even damage to the sealing rings between the sealing cartridge and the drive shaft facing the motor would result in a drop in volume flow and would be detected by the flow monitor.

It is preferable that the seal cartridge includes double mechanical seals between a pump casing and the drive shaft sealing the sealing chamber. This double mechanical seal allows the formation of the sealing chamber and the application of a barrier fluid to the sealing chamber. At the same time, the seal rings of the double mechanical seal are lubricated by the sealing liquid, so that their functionality is maintained.

The seal cartridge is preferably designed with two internal double mechanical seals in the sealing chamber. This means that an outer mechanical seal ring is provided on the respective housing section facing the drive shaft and another mechanical seal ring is provided inside the seal chamber.

Preferably, the seal rings of the mechanical seals, which are located inside the sealing chamber, are held in place by a contact pressure device against the seal rings accommodated by the housing.

An alternative design of the seal cartridge provides for a double mechanical seal inside the seal chamber and a mechanical seal outside the seal chamber between the seal cartridge and the pump impeller. Such a so-called tandem arrangement allows easy assembly.

This is further preferably provided that the double mechanical seal positioned inside and outside the sealing chamber is each assigned a contact pressure device, which positions one mechanical seal in contact with the mechanical seal fixed in the housing.

The invention as well as other advantageous forms of execution and further training of the same are described and explained in more detail below on the basis of the examples shown in the drawings. The features to be taken from the description and the drawings can be applied individually on their own or in any combination in accordance with the invention. It is shown:
Figure 1 a circuit diagram of a plant for reducing the alcohol content of a beverage,
Figure 2 a schematic sectional view of a pump in the plant as shown in Figure 1,
Figure 3 a schematic view of the pump casing as shown in Figure 2, and
Figure 4 a schematic sectional view through a sealing cartridge in Figure 2.

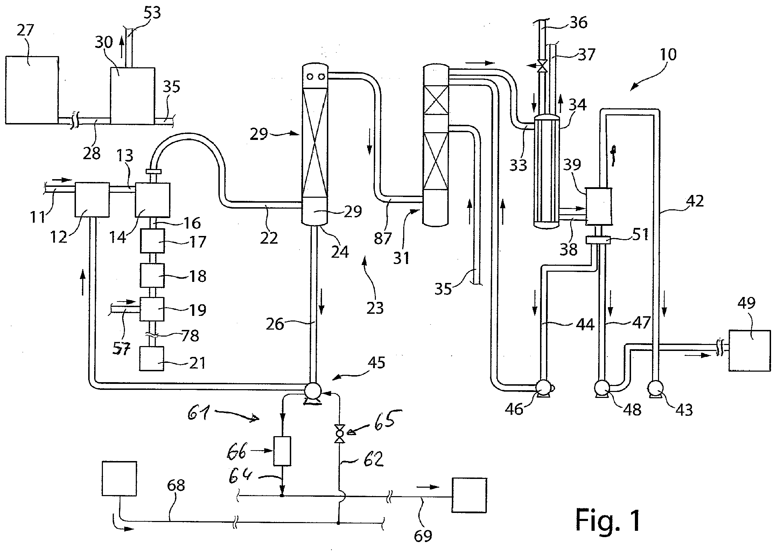

Figure 1 shows a schematic representation of a plant 10 for reducing the alcohol content of a beverage in accordance with the invention. Steam with a temperature of, for example, 110 °C is fed via a line 11 to a heat exchanger 12, the first circuit of which, in which this heat exchanger 12 is integrated, is not shown in detail. In the second circuit of heat exchanger 12 a line 13 is provided which leads to a separator 14. From the bottom of the separator 14 a pipe 16 emerges, which discharges the non-alcoholic beverage. The non-alcoholic beverage is preferably wine, sparkling wine or beer. In the outlet line 16 there is a heat exchanger 17, which cools down the temperature of the finished product and serves the heat economy. In addition, outlet line 16 contains a cooler 18 which cools the finished product down to 5 °C, for example. Finally, an inoculation station 19 follows, to which fractional substances such as _{CO2}, fragrances and/or aromatic substances are fed, which are separated by fraction recovery from vapours of the alcoholic beverage. Through the injection station 19 the fractional substances are discharged in doses into the outlet line 16 and mixed into the alcoholic beverage. Downstream of the inoculation station 19 there is a collecting container 21 for receiving the finished product, i.e. the reduced-alcohol beverage.

The term "reduced-alcohol drink" also includes drinks in which the alcohol contained in the drink is reduced to such an extent that these drinks are described as dealcoholised or non-alcoholic and may in particular also contain 0.0% alcohol.

From the head of the separator 14, a first vapour line 22 leads the warm, non-separated vapours to a lower area of a rectifier 23. This rectifier 23 comprises a second column or lower column 29. From the bottom 24 of the rectifier 23, a line 26 leads to the heat exchanger 12. This closes this circuit in which the reduced-alcohol beverage is led.

In a storage container 27 the alcoholic beverage is stored, which is to be reduced in alcohol content. A line 28 leads from the storage tank 27 to a degasser 30, in which fractional substances, especially CO2, are discharged via a line 53. These fractional substances can be fed to a fractional substance recovery device not shown, in order to feed the fractional substances to the inoculation station 19 via a line 57 leading away from it. From the degasser 30, line 35 leads to the second circuit of plant 10. The alcoholic beverage is fed via line 35 to the middle section of a first column 31 of the rectifier 23. A second vapour line 33 is provided at the upper end region of the rectifying apparatus 23 or at the head 32 of the rectifying apparatus 23, which discharges the vapours containing alcohol, flavour and/or aromas. The temperature in head 32 is, for example, 30 °C. This corresponds to approximately 44 mbar. The temperature in the rectifier 23 above the bottom 24 is, for example, 39 °C at a pressure of, for example, 70 mbar.

A third vapour line 87 is provided between the second column 29 and the first column 31. Instead of the two-part rectifier 23, a vessel may also be provided in which the first and second columns 29, 31 are arranged one above the other. The third vapour line 87 can be omitted.

In the steady state of rectifier 23, the second vapour line 33 discharges about 80 % of the alcohol, alcohol always being understood to be ethanol. The second vapour line 33 leads to a condenser 34, which is fed via a line 36 with coolant, in particular glycol. The coolant is discharged through one line 37. In the head of the condenser 34, the vapours fed to the condenser 34 may not yet condensed, which is why the vapours are fed to a cooler 39 via a line 38. A vacuum line 42 leads into the head of the separator 39, which is connected to a pump 43 designed as a vacuum pump and which may in a first step also generates the vacuum present in the rectifier 23. From the bottom of the separator 39 there is a line 44 to a controller 51. A controller 51 determines the volume ratio in lines 44 and 47 of the separator 39. The line 47 drains the alcohol not required for feedback via a pump 48 to an alcohol tank 49, which carries at least liquefied alcohol in liquid form, for example with a concentration of not more than 82 %. The percentage may be between 20 % and 80 % depending on the dealcoholisation effort. The liquefied alcohol is fed via a pump 46 to the head 32 of the rectifier 23, in particular at a level no higher than the outlet of the second vapour line 33 above the first column 31.

When the plant is started up, line 47 initially remains closed until the alcohol content in lines 44, 33 and 38 has reached the desired level, for example 80%. A further increase in the alcohol content can be prevented by the controller 51 by releasing line 47, to the extent that it is ensured that it maintains the desired level on the alcohol percentage feedback path.

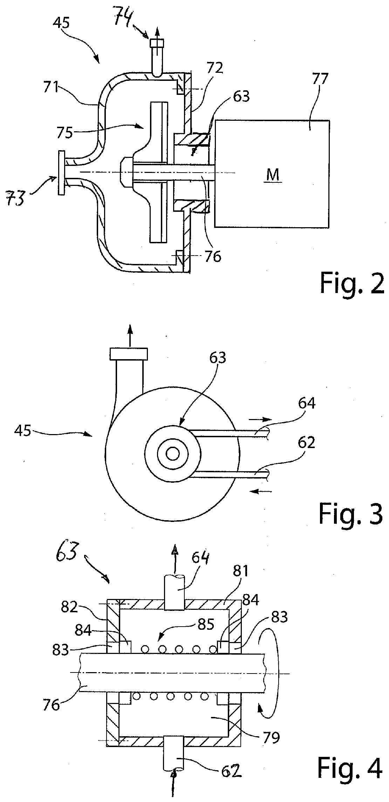

In line 26, through which a beverage reduced in alcohol is discharged from the second column 29, a pump 45 is provided to feed the reduced-alcohol beverage to heat exchanger 12. This pump 45 is designed as a centrifugal pump. This pump 45 is monitored by a monitoring device 61 during the operation of the plant 10 for its function. This monitoring device 61 comprises a feed line 62, which is connected to a sealing cartridge 63 in the pump 45. A discharge line 64 is provided leading from the sealing cartridge 63 (Figure 4). This supply line 62 and discharge line 64 are arranged separately from line 26 and a suction line leading to pump 45 and a discharge line leading from pump 45 respectively. A flow regulator 65 is provided in the supply line 62. This flow controller 55 can be a manually adjustable valve, such as a ball valve, and/or an electrically controllable valve in which the flow cross-section can be variably controlled by a control device. A flow monitor 66 is provided in the discharge line 64, which monitors the volume flow in the discharge line 64. The flow monitor 66 emits corresponding signals to the control device of the plant 10, which is not described in detail, so that these signals are processed accordingly in the control device.

The pumps 46 and 48 are similar in design to pump 45, which is a centrifugal pump, but preferably several pumps 43, 45, 46, 48 are controlled via a common main supply line 68, from which the supply line 62 branches off to the corresponding pumps 43, 45, 46, 48. This main supply line 68 can be supplied with a constant volume flow of sealing liquid, especially water. Alternatively, a reservoir in the form of a tank can be provided to supply the main supply line 68 with the sealing liquid. The discharge lines 64 leading away from the respective pumps 43, 45, 46, 48 open into a common outflow line 69. This outflow line 69 can transfer the sealing liquid into a tank or discharge it in any other way.

The pumps 43, 45, 46, 48 can be frequency controlled. Alternatively, it is also possible to switch the pumps 43, 45, 46, 48 on or off, whereby in the switched-on state the pumps 43, 45, 46, 48 operate at full or maximum speed.

Figure 2 shows a schematic sectional view of pump 45 as an example. The at least one other pump 46, 48 can be constructed in the same way. This pump 45 comprises a pump housing 71, which is closed by a cover 72. At pump-casing 71 an inlet 73 and an outlet 74 is provided. In a pump chamber there is an impeller 75, which is driven in rotation by a motor 77 via a drive shaft 76. The medium to be pumped is sucked in via the inlet 73 and discharged under pressure through the outlet 74. For sealing between the pump casing 71, especially the cover 72, and the drive shaft 76 the sealing cartridge 63 is provided. This sealing cartridge 63 can be inserted into an opening of the cover 72 and screwed to it. In addition, seals not shown in detail may also be provided between the sealing cartridge 63 and the opening in cover 72. This sealing cartridge 63 comprises a sealing chamber 79, through which a sealing medium flows.

Figure 3 shows a side view of the pump casing 71, in particular the cover 72 of pump 45. The inlet line 62 flows directly into the sealing cartridge 63 and leads the sealing medium into the sealing chamber 79, from where the discharging line 64 branches off.

Figure 4 shows a schematic sectional view through the seal cartridge 63. The sealing cartridge 63 comprises a housing 81, which is closed by a detachable closure 82. The drive shaft 76 passes through the housing 81 and the closure 82. A sealing ring 83 is provided in both the housing 81 and the closure 82. A further sealing ring 84 is provided inside each of the sealing rings 83. These inner sealing rings 84 are held in contact with the sealing rings 83 by a pressure device 85. In a simple design, the pressure device 85 can only be designed as an internal pressure spring. The seals 83, 84 are in contact with each other and form a double-acting mechanical seal between the sealing chamber 79 and the drive shaft 76, thus providing an increased seal between the drive shaft 76 and the pump casing 71 or in the cover 72. The sealing rings 83, 84 are lubricated by the sealing medium.

Alternatively, it can be provided that, for example, the double mechanical seal 83, 84 is assigned to the impeller 75 or the blade impeller and positioned outside the sealing chamber 79. For example, between the impeller 75 and the sealing ring 83 arranged in the closure 82 a mechanical seal bushing with the sealing ring 84 can be provided, whereby the mechanical seal bushing with the sealing ring 83 held in the closure 82 also forms a double mechanical seal. A pin may be provided in the sealing chamber 79 in the drive shaft 76, whereby a compression spring is held in contact between the pin and the inner seal ring 84 and presses the inner seal ring 84 against the outer seal ring 83.

Several situations can be monitored by this monitoring device 61:
If, for example, the double mechanical seal 83, 84 between the sealing chamber 71 and the outside of drive shaft 76 leading to the motor 77 is damaged, a leakage point will occur so that the sealing medium escapes from the sealing chamber 79 into the environment and a reduced volume flow is detected at the flow monitor 66.

Furthermore, it can be recorded whether a sufficient volume flow is fed to the sealing chamber 79, passes through the sealing chamber 79 and is discharged via the discharge line 64.

Furthermore, a reduced volume flow can be detected by the flow monitor 66. In this case the mechanical seal 83, 84 facing to the impeller 75 may be damaged, since a portion of the medium to be pumped through the sealing chamber 79 is then transferred by the pump 45 via the sealing chamber 79 into the outlet 74 of the pump 45.

The direct recording of possible faults that may occur or damage to pump 45, 46, 48, the production safety of such a plant 10 may be increased.

## Claims

1. Method for monitoring a plant (10) for reducing an alcohol content in a beverage,
- in which a medium is sucked in by a pump (45, 46, 48) via a suction line (26, 44, 47, 42) and is supplied under pressure to a downstream component of the plant (10) via a pressure line,
- in which the pump (45, 46, 48) has, between a drive shaft (76) of a motor (77) and a housing (71, 72), a sealing cartridge (63) which comprises a sealing chamber (79) which is supplied with a sealing medium via an inlet line (62) and the sealing medium is discharged from the sealing chamber (79) via an line (64),
- in which the volume flow of the sealing medium discharged from the sealing chamber (79) into the discharge line (64) is monitored in the discharge line (64) by means of a flow monitor (66).

2. Method according to claim 1, **characterized in that** the sealing medium is supplied to the sealing chamber (79) at a constant volume flow via the supply line (62) and the supplied volume flow is preferably adjusted by means of a controllable valve or manually.

3. Method according to claim 1 or 2, **characterised in that** in a control device of the plant (10) the set volume flow, which is supplied to the sealing chamber (79), is compared with a volume flow detected on the outlet side in the discharge line (64) by the flow monitor (66), and in the event of a deviation of the detected value outside a preferably adjustable tolerance range, an error message is output to a control device.

4. Method according to one of the preceding claims, **characterized in that** a pump with the sealing cartridge (63) designed as a centrifugal pump (45, 46, 48) or as a vacuum pump (43) is used in the plant (10), in which the sealing chamber (79) is sealed off from the drive shaft (76) with a double mechanical seal (83, 84).

5. Plant for reducing the alcohol content in a beverage,
- with at least one degasser (30), to which the alcoholic beverage is supplied from a storage container (27) connectable thereto,
- with a rectifier (23) which comprises a first column (31) and a second column (29) which are arranged one above the other in a housing or which are arranged separately and spatially adjacent to one another,
- with a line (26) branching off from a bottom (24) of the second column (29) and with a pump (45) which feeds a reduced-alcohol beverage to a separator (14), from which the reduced-alcohol beverage is discharged from the plant (10) or fed to a collecting tank (21) via an outlet line (16),
- having a condenser (34) which is connected downstream of the rectifier (23), from which condenser, directly or with the interposition of a separator (39), alcoholic beverage is fed by means of a pump (46) via a line (44) to the first column (31) and from which, directly or with the interposition of the separator (39) with a pump (46, 48) via a line (47), alcohol not required is removed from the plant (10),
**characterized in,**
- **that** the at least one pump (43, 45, 46, 48) has, between a housing (71, 72) of the pump (43, 45, 46, 48) and a drive shaft (76), a sealing cartridge (63) with a sealing chamber (79) for a sealing medium which is supplied via a supply line (62) leading to the sealing chamber (79) and is discharged via a discharge line (64) leading away from the sealing chamber (79), and
- **that** a flow monitor (66) for detecting the volume flow is arranged in the discharge line (64) of the sealing cartridge (63).

6. Plant according to claim 5, **characterized in that** the seal cartridge (63) comprises a double mechanical seal (83, 84) between a cover (72) of the housing (71) and the drive shaft (76) sealing the sealing chamber (79).

7. A plant according to claim 6, **characterized in that** the double mechanical seal (83, 84) is provided internally in the sealing chamber (79).

8. Plant according to claim 7, **characterized in that** a pressing device (85) is provided in the sealing chamber (79), by means of which the inner sliding rings (84) are held in contact with the sliding rings (83) fixed in the housing (81) and in the closure (82) of the sealing cartridge (63).

9. Plant according to claim 5 or 6, **characterized in that** one double mechanical seal (83, 84) is arranged inside the sealing chamber (79) and a further double mechanical seal (83, 84) is arranged outside the sealing chamber (79) and facing the impeller (75) of the pump (45, 46, 48).

10. Plant according to claim 9, **characterized in that** a pressing device (85) positioned inside and outside at the sealing chamber (79) is provided, which positions the sliding rings (84) in abutment with the sliding rings (83) fixed in the housing (81) and the closure (82).
